# EUROPEAN PATENT APPLICATION

(11) **EP 3 719 066 A1**
(43) Date of publication of application: **07.10.2020**
(21) Application number: 19166551.2
(22) Date of filing: 01.04.2019
(51) Int. Cl.: C08K 5/00, C08G 64/04, C08G 64/06, C08G 64/12, C08G 64/16, C08K 5/42, C08L 69/00, G02B 1/04, C08G 64/14, C08G 64/42, C08G 64/24, B29C 45/00

(54) **BRANCHED, HIGH HEAT POLYCARBONATES, METHODS OF MANUFACTURE, AND ARTICLES PREPARED THEREFROM**

(71) Applicant: SABIC Global Technologies B.V., 4612 PX Bergen op Zoom (NL)
(72) Inventor: VAN DER MEE, MARK ADRIANUS JOHANNES, 4612 PX Bergen op Zoom (NL); RAMAKRISHNAN, VAIDYANATH, 4612 PX Bergen op Zoom (NL); SYBERT, PAUL DEAN, Mt Vernon, IN 47620 (US); CHELLAMUTHU, MANOJUKUMAR, Mt Vernon, IN 47620 (US)
(74) Representative: Balder IP Law, S.L.

(57) **Abstract**

A branched polycarbonate comprising: high heat aromatic carbonate units derived from a high heat aromatic dihydroxy monomer units; optionally, low heat carbonate units derived from low heat monomer units; and 0.05-1.5 mole percent, preferably 0.05-1.0 mole percent, of a branching agent based on the total number of moles in the branched polycarbonate; wherein the branched polycarbonate has a tensile stress at break of 10-70 megaPascals measured according to ISO 527, and a glass transition temperature of 170-260°C measured by differential scanning calorimetry according to ASTM D3418 with a 20°C/min heating rate.

## Description

### BACKGROUND

This disclosure relates to polycarbonates, and in particular to branched, high heat polycarbonates, methods of manufacture, and articles prepared therefrom.

Polycarbonates are useful in the manufacture of articles and components for a wide range of applications, from automotive parts to electronic appliances. Because of their broad use, particularly in high heat applications, it is desirable to provide thin-walled articles that have high heat resistance, good impact strength, and good processability. However, polycarbonates having high temperature resistance tend to have limited flow capabilities, making them difficult to process under high shear conditions, such as for example, injection molding.

There accordingly remains a need for polycarbonates with improved thermal performance, good impact strength, and good processability. It would be a further advantage if the polycarbonates having improved thermal performance also had good impact strength and processability.

### BRIEF DESCRIPTION

The above-described and other deficiencies of the art are met by a branched polycarbonate comprising: high heat aromatic carbonate units derived from a high heat aromatic dihydroxy monomer units; optionally, low heat carbonate units derived from low heat monomer units; and 0.05-1.5 mole percent, preferably 0.05-1.0 mole percent, of a branching agent based on the total number of moles in the branched polycarbonate; wherein the branched polycarbonate has a tensile stress at break of 10-70 megaPascals measured according to ISO 527, and a glass transition temperature of 170-260°C measured by differential scanning calorimetry according to ASTM D3418 with a 20°C/min heating rate.

In another aspect, a method of manufacture comprises combining the above-described components to form a branched polycarbonate.

In another aspect, a thermoplastic composition comprises the above-described branched polycarbonate.

In yet another aspect, an article comprises the above-described branched polycarbonate.

In still another aspect, a method of manufacture of an article comprises molding, extruding, or shaping the above-described branched polycarbonate into an article.

The above described and other features are exemplified by the following figures and detailed description.

### BRIEF DESCRIPTION OF THE DRAWINGS

The following is a brief description of the drawings wherein like elements are numbered alike and which are exemplary of the various aspects described herein.
FIG. 1 shows the data analysis of spiral flow where the two variables are the amount of THPE in the branched PPPBP-BPA copolycarbonate (X-axis) and the molecular weight of the BPA homopolycarbonate (Y-axis). The flow length is measured in inches using a spiral depth of 60 millimeters.
FIG. 2 shows data analysis of Notched Izod Impact (NII, 125 mm thick bar) where the two variables are the amount of THPE in the branched 2-phenyl-3,3'-bis(4-hydroxyphenyl) phthalimidine-co-bisphenol A (PPPBP-BPA) copolycarbonate (X-axis) and the molecular weight of the BPA homopolycarbonate (Y-axis).
FIG. 3 shows the change in calculated entanglement molecular weight (Mₑ) as a function of increasing high heat monomer content for 1,1-bis(4-hydroxyphenyl)-3,3,5-trimethyl-cyclohexane-co-bisphenol A (BPA-BPI) and PPPBP-BPA.
FIGS. 4A-4B show the zero-shear viscosity (FIG. 4A) and high shear viscosity (FIG. 4B) for 45 mol% and 33 mol% PPPBP in PPPBP-BPA.
FIGS. 5A-5B show the zero-shear viscosity (FIG. 5A) and high shear viscosity (FIG. 5B) for 57 mol% and 75 mol% BPI in BPA-BPI.

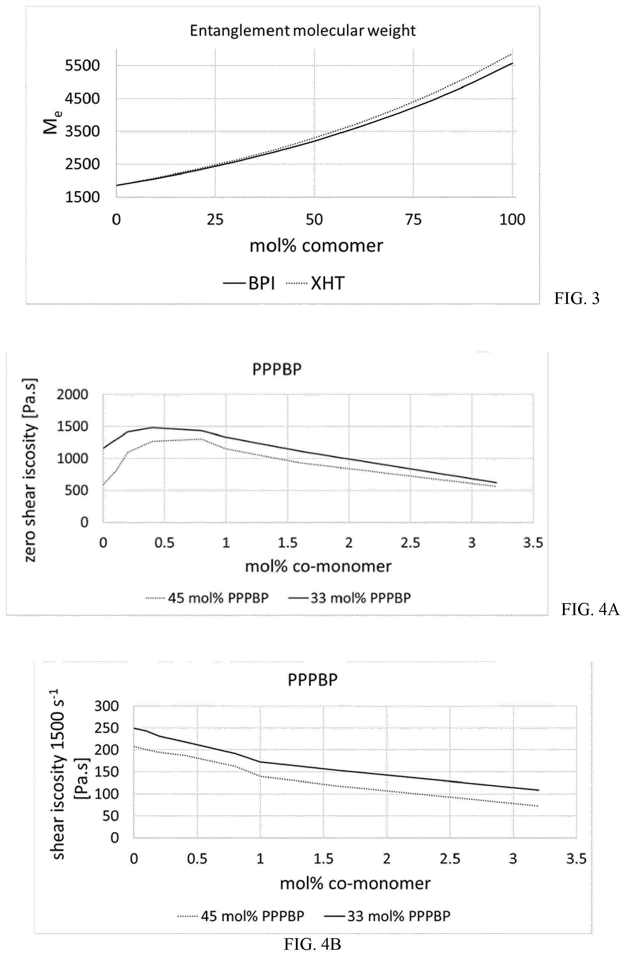

FIGS. 4A-4B show the zero-shear viscosity (FIG. 4A) and high shear viscosity (FIG. 4B) for 45 mol% and 33 mol% PPPBP in PPPBP-BPA.

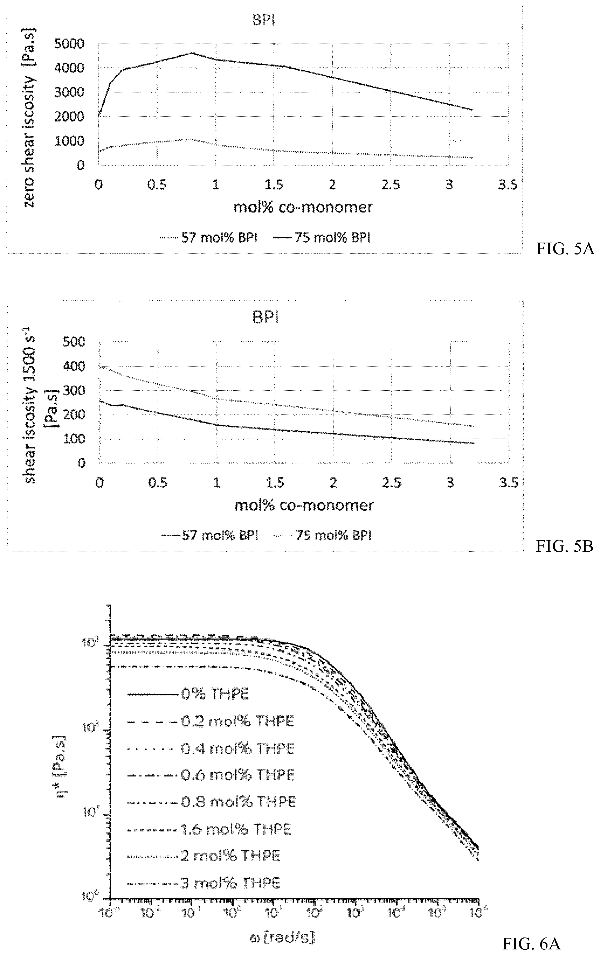

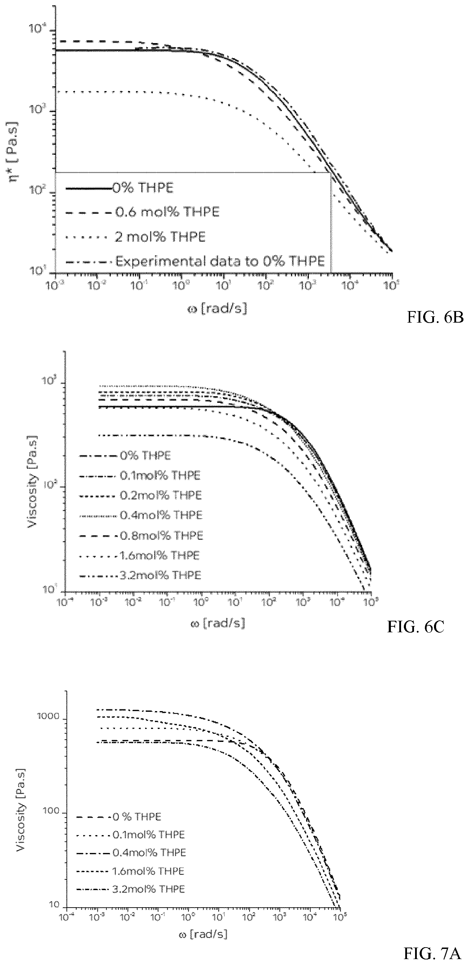

FIGS. 6A-6C show plots of complex viscosity (η*) versus frequency (ω) of BPA-BPI copolycarbonates with varying mol% of THPE. FIG. 6A shows the calculated viscoelastic response for a BPA-BPI (75/25) copolycarbonate having an Mw of 21 kDa, with 0.2, 0.4. 0.6, 0.8, 1.6, 2.0. or 3.0 mol% THPE. FIG. 6B shows the results for a BPA-BPI(75/25) copolycarbonate having an Mw of 29-30 kDa with 0, 0.6, or 2.3 mol% THPE. FIG. 6C shows the the calculated viscoelastic response for a BPA-BPI (57/43) copolycarbonate having an Mw of 29-30 kDa, with 0.1, 0.2, 0.4, 0.8, 1.6, or 3.2 mol% THPE.

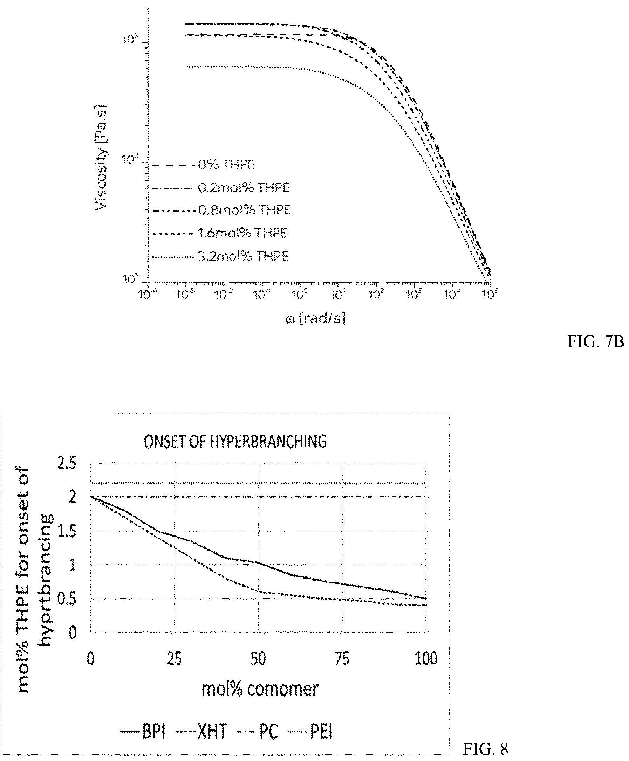

FIGS. 7A-7B show plots of complex viscosity as a function of frequency (ω) for PPPBP-BPA copolymers. FIG. 7A shows the calculated viscoelastic response for a PPPBP-BPA (33/67) copolycarbonate having an Mw of 21 kDa, with 0, 0.1, 0.4, 1.6, or 3.2 mol% THPE. FIG. 7B shows the calculated viscoelastic response for a PPPBP-BPA (45/55) copolycarbonate having an Mw of 21 kDa, with 0, 0.2, 0.8, 1.6, or 3.2 mol% THPE.
FIG. 8 shows the onset of hyperbranching for the BPA-BPI and PPPBP-BPA copolycarbonates compared to a BPA homopolycarbonate (PC) and a polyetherimide (PEI).

### DETAILED DESCRIPTION

The inventors hereof have discovered branched polycarbonates having high heat resistance, good impact strength, and good processing properties. Manufacture of thin-walled parts from high heat resins under high shear conditions can be challenging due to the limited flow capabilities of high heat resins. The inventors hereof discovered that the level of branching in high heat polycarbonates affects the processability and impact resistance of high heat polycarbonates. For example, highly branched high heat polycarbonates had improved the flow properties under high shear conditions, but there was a dramatic loss in impact resistance for formed articles. The inventors hereof found that an appropriate level of branching improved the flow properties of the high heat polycarbonates while maintaining impact resistance.

As stated above, polycarbonates comprise repeat carbonate units including high heat aromatic carbonate units (1), and optionally low heat carbonate units (2). 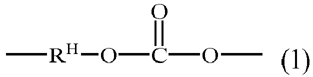 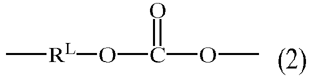 wherein R^{H} is derived from the corresponding high heat aromatic dihydroxy monomer, and R^{L} is derived from the corresponding low heat aromatic dihydroxy monomer. Each of these is described in further detail below.

The high heat aromatic carbonate units (1) are derived from the corresponding high heat aromatic dihydroxy monomer units. As used herein, a "high heat aromatic dihydroxy monomer unit" is a compound that can be used to make a polycarbonate homopolymer having a glass transition temperature (Tg) of 175-330°C determined by differential scanning calorimetry (DSC) as per ASTM D3418 with a 20°C/min heating rate. Such monomers can have 19 or more carbon atoms. Exemplary high heat aromatic dihydroxy monomer units (R^{H} groups) in high heat aromatic carbonate units can be of formulas (1a) to (1g) 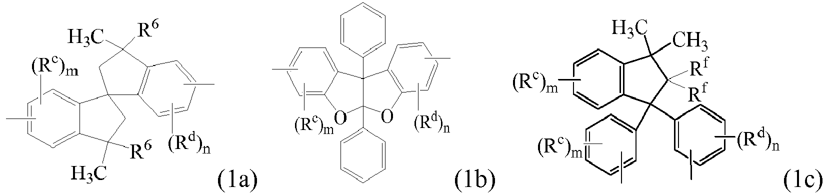 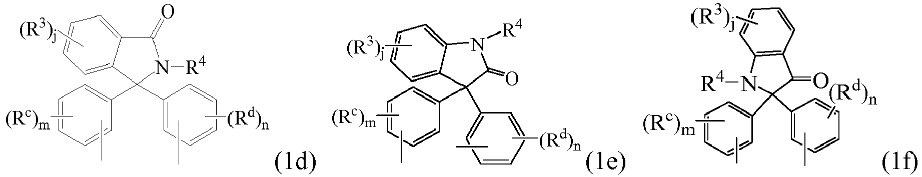 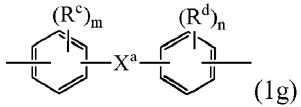 wherein R^{c} and R^{d} are each independently a C₁₋₁₂ alkyl, C₂₋₁₂ alkenyl, C₃₋₈ cycloalkyl, or C₁₋₁₂ alkoxy, each R^{f} is hydrogen or both R^{f} together are a carbonyl group, each R³ is independently C₁₋₆ alkyl, R⁴ is hydrogen, C₁₋₆ alkyl, or phenyl optionally substituted with 1-5 C₁₋₆ alkyl groups, R⁶ is independently C₁₋₃ alkyl or phenyl, preferably methyl, X^{a} is a C₆₋₁₂ polycyclic aryl, C₃₋₁₈ mono- or polycycloalkylene, C₃₋₁₈ mono- or polycycloalkylidene, -C(R^{h})(R^{g})- group wherein R^{h} is hydrogen, C₁₋₁₂ alkyl, or C₆₋₁₂ aryl and R^{g} is C₆₋₁₂ aryl, or -(Q^{a})ₓ-G-(Q^{b})_{y}- group wherein Q^{a} and Q^{b} are each independently a C₁₋₃ alkylene, G is a C₃₋₁₀ cycloalkylene, x is 0 or 1, and y is 1, and j, m, and n are each independently 0-4. A combination of different high heat aromatic dihydroxy monomer units can be used.

In an aspect, R^{c} and R^{d} are each independently a C₁₋₃ alkyl or C₁₋₃ alkoxy, each R⁶ is methyl, each R³ is independently C₁₋₃ alkyl, R⁴ is methyl, or phenyl, each R⁶ is independently C₁₋₃ alkyl, or phenyl, preferably methyl, X^{a} is a C₆₋₁₂ polycyclic aryl, C₃₋₁₈ mono- or polycycloalkylene, C₃₋₁₈ mono- or polycycloalkylidene, -C(R^{h})(R^{g})- group wherein R^{h} is C₁₋₃ alkyl or C₆₋₁₂ aryl and R^{g} is C₆₋₁₂ aryl, or -(Q¹)ₓ-G-(Q²)_{y}- group, wherein Q¹ and Q² are each independently a C₁₋₃ alkylene and G is a C₃₋₁₀ cycloalkylene, x is 0 or 1, and y is 1, and j, m, and n are each independently 0 or 1.

Exemplary R^{H} groups include those of formulas (1b-1), (1c-1), (1e-1), and (1g-1) to (1g-11) 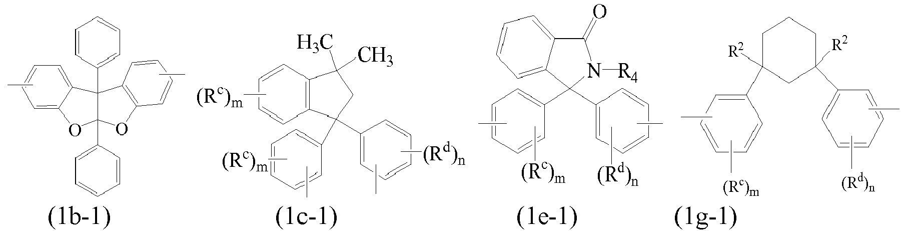 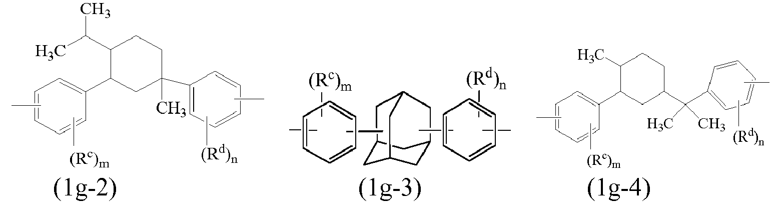 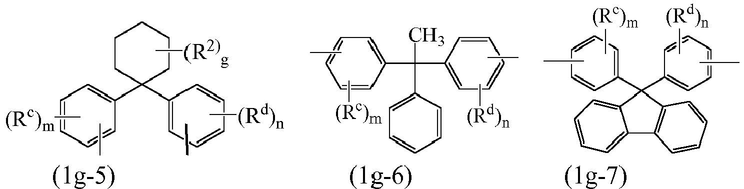 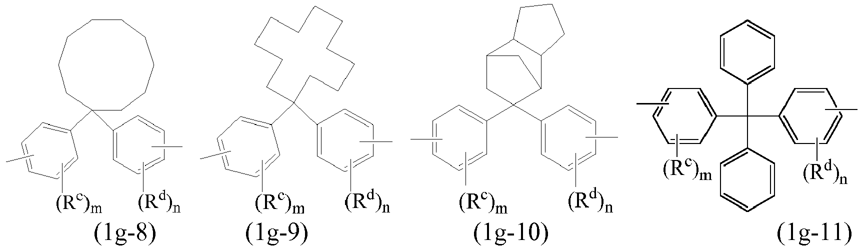 wherein R^{c} and R^{d} are the same as defined for formulas (1a) to (1g), each R² is independently hydrogen or C₁₋₄ alkyl, m and n are each independently 0-4, each R³ is independently C₁₋₄ alkyl or hydrogen, R⁴ is C₁₋₆ alkyl or phenyl optionally substituted with 1-5 C₁₋₆ alkyl groups, and g is 0-10. In a specific aspect each bond of the divalent group is located para to the linking group that is X^{a}, and R^{c} and R^{d} are each independently a C₁₋₃ alkyl, or C₁₋₃ alkoxy, each R² is methyl, x is 0 or 1, y is 1, and m and n are each independently 0 or 1.

The high heat aromatic dihydroxy monomer units are preferably of the formulas 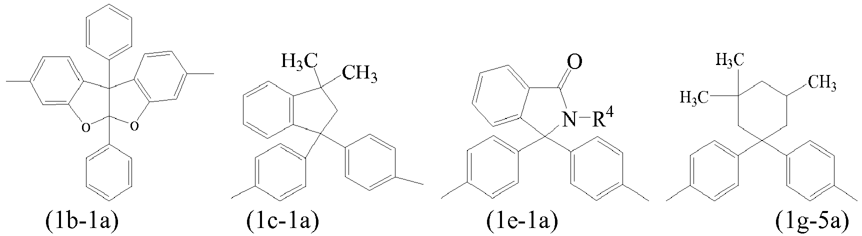 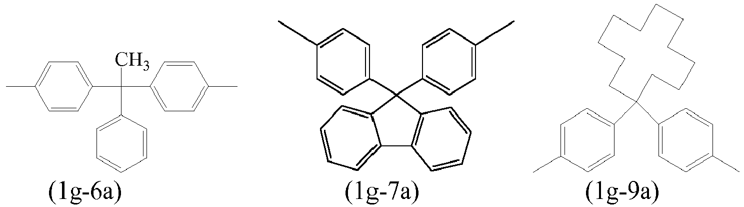 wherein R⁴ is methyl or phenyl.

Preferably, the high heat aromatic dihydroxy monomer unit is derived from the corresponding bisphenol, in particular from 3,8-dihydroxy-5a,10b-diphenyl-coumarano-2',3',2,3-coumarane (corresponding to structure 1b-1a), 4,4'-(3,3-dimethyl-2,2-dihydro-1H-indene-1,1-diyl)diphenol (corresponding to structure 1c-1a), 2-phenyl-3,3'-bis(4-hydroxyphenyl) phthalimidine (PPPBP) (corresponding to structure 1e-1a, wherein R⁴ is phenyl), 1,1-bis(4-hydroxyphenyl)-3,3,5-trimethyl-cyclohexane (BPI) (corresponding to structure 1g-5a), 4,4'-(1-phenylethylidene)bisphenol (corresponding to structure 2g-6a), 9,9-bis(4-hydroxyphenyl)fluorene (corresponding to structure (1g-7a), 1,1-bis(4-hydroxyphenyl)cyclododecane (corresponding to structure 1g-9a), or a combination thereof. More preferably, the high heat aromatic dihydroxy monomer unit is derived from PPPBP, BPI, or a combination thereof

The polycarbonate can include low heat aromatic carbonate units (2) derived from the corresponding low heat aromatic dihydroxy monomer units (R^{L}). As used herein, a "low heat aromatic dihydroxy monomer unit" means a compound that can be used to manufacture a polycarbonate homopolymer having a Tg of less than 170°C, for example 120-160°C, each as determined by DSC according to ASTM D3418 with a 20°C/min heating rate. Such monomers generally have 18 or fewer carbon atoms. Exemplary R^{L} groups in low heat aromatic carbonate units (2) can be of formula (2a) 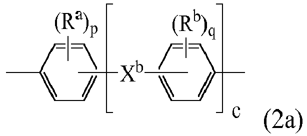 wherein R^{a} and R^{b} are each independently a halogen, C₁₋₃ alkoxy, or C₁₋₃ alkyl, c is 0-4, and p and q are each independently integers of 0 or 1. In an embodiment, p and q are each 0, or p and q are each 1 and R^{a} and R^{b} are each a methyl, disposed meta to the hydroxy group on each arylene group. X^{b} in formula (2a) is a bridging group connecting the two hydroxy-substituted aromatic groups, where the bridging group and the hydroxy substituent of each C₆ arylene group are disposed ortho, meta, or para (preferably para) to each other on the C₆ arylene group. X^{b} can be, for example, a single bond, -O-, -C(O)-, or a C₁₋₆ organic group, which can be cyclic or acyclic, aromatic or non-aromatic, and can further comprise heteroatoms such as halogens, oxygen, nitrogen, sulfur, silicon, or phosphorous. For example, X^{b} can be a C₃₋₆ cycloalkylidene, a C₁₋₆ alkylidene of the formula -C(R^{c})(R^{d})- wherein R^{c} and R^{d} are each independently hydrogen, C₁₋₅ alkyl, or a group of the formula -C(=R^{e})- wherein R^{e} is a divalent C₁₋₅ hydrocarbon group. Some illustrative examples of dihydroxy compounds that can be used are described, for example, in WO 2013/175448 A1, US 2014/0295363, and WO 2014/072923.

In an aspect, the low heat aromatic dihydroxy monomer unit is of formula (2b) 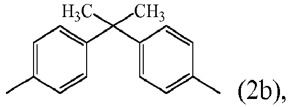 which can be derived from 2,2-is (4-hydroxyphenyl)propane, also known as bisphenol A (BPA).

In an aspect, the branched polycarbonate includes high heat aromatic carbonate units derived from 2-phenyl-3,3-bis(4-hydroxyphenyl)phthalimidine, 1,1-bis-(4-hydroxyphenyl)-3,3,5-trimethylcyclohexane, or a combination thereof; and low heat carbonate units, preferably derived from bisphenol A.

Branched polycarbonates can be prepared by adding a branching agent during polymerization. Suitable branching agents can include polyfunctional organic compounds containing at least three functional groups such as hydroxyl, carboxyl, carboxylic anhydride, haloformyl, and mixtures of the foregoing functional groups. Specific examples include trimellitic acid, trimellitic anhydride, tris-phenol TC (1,3,5-tris((p-hydroxyphenyl)isopropyl)benzene), tris-phenol PA (4(4(1,1-bis(p-hydroxyphenyl)-ethyl)alpha, alpha-dimethyl benzyl)phenol), 4-chloroformyl phthalic anhydride, trimesic acid, and benzophenone tetracarboxylic acid. Combinations comprising linear polycarbonates and branched polycarbonates can be used.

In some aspects, a particular type of branching agent is used to create branched polycarbonates. These branched polycarbonates have statistically more than two end groups. The branching agent is added in an amount (relative to the bisphenol monomer) that is sufficient to achieve the desired branching content, that is, more than two end groups. The molecular weight of the polymer can become very high upon addition of the branching agent, and to avoid excess viscosity during polymerization, an increased amount of a chain stopper agent can be used, relative to the amount used when the particular branching agent is not present. The amount of chain stopper used is generally above 5 mole percent and less than 20 mol% compared to the bisphenol monomer.

Such branching agents include aromatic triacyl halides, for example triacyl chlorides of formula (3), a tri-substituted phenol of formula (4), or (isatin-bis-phenol) (5) 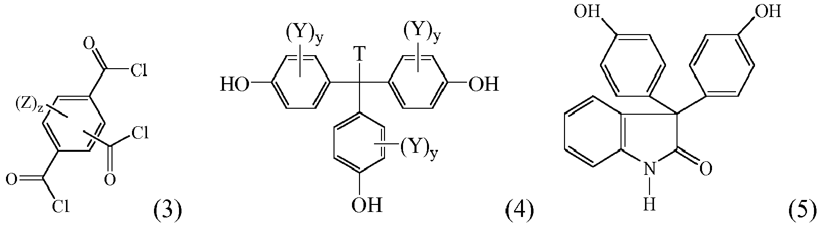 wherein in formula (3) Z is a halogen, C₁₋₃ alkyl, C₁₋₃ alkoxy, C₇₋₁₂ arylalkylene, C₇₋₁₂ alkylarylene, or nitro, and z is 0 to 3 and in formula (4)T is a C₁₋₂₀ alkyl, C₁₋₂₀ alkoxy, C₇₋₁₂ arylalkyl, or C₇₋₁₂ alkylaryl, Y is a halogen, C₁₋₃ alkyl, C₁₋₃ alkoxy, C₇₋₁₂ arylalkyl, C₇₋₁₂ alkylaryl, or nitro, s is 0 to 4.

In some aspects, the branching agent is trimellitic acid, trimellitic anhydride, trimellitic trichloride, tris-p-hydroxy phenyl ethane, isatin-bis-phenol, 1,3,5-tris((p-hydroxyphenyl)isopropyl)benzene, (4(4(1,1-bis(p-hydroxyphenyl)-ethyl)alpha,alpha-dimethyl benzyl)phenol), 4-chloroformyl phthalic anhydride, trimesic acid, benzophenone tetracarboxylic acid, or a combination thereof, preferably wherein the branching agent is tris-p-hydroxy phenyl ethane. In an aspect, a single branching agent is present. In another aspect, two or more branching agents are present.

The amount of the branching agents used in the manufacture of the branched polycarbonate is dependent on a number of considerations, including, the flow properties suitable for high shear processing of the polycarbonate and the desired impact resistance, as well as considerations such as the type of R¹ groups, the amount of an end-capping agent as described below, and the desired molecular weight of the polycarbonate. In some aspects, the branching agent is present from 0.05-1.5 mol%, 0.05-1.25, or 0.05-1.0 mol%, or 0.05-0.8 mol% based on the total moles of the polycarbonate.

An endcapping agent) is preferably included during polymerization to provide end groups. The endcapping agent (and thus end groups) are selected based on the desired properties of the polycarbonates, including stability under high heat conditions. Exemplary end-capping agents include C₁₋₂₂ alkyl-substituted phenols such as p-cumyl-phenol, resorcinol monobenzoate, and p-and tertiary-butyl phenol, monoethers of diphenols, such as p-methoxyphenol. Other endcapping agents are described in US 2014/0295363. Combinations of different endcapping agents / end groups can be used.

The branched polycarbonate can include up to and including 100 mol% of the high heat monomers. In an aspect, the branched polycarbonate is a copolycarbonate comprising 20-80 mol%, of the high heat aromatic carbonate units; and 20-80 mol%, of the low heat carbonate units based on the total moles of the polycarbonate. In some aspects, the branched polycarbonate can include 20-60 mol%, preferably 30-50 mol%, of high heat aromatic carbonate units derived from 2-phenyl-3,3-bis(4-hydroxyphenyl)phthalimidine and 40-80 mol%, preferably 50-70 mol%, of low heat carbonate units derived from bisphenol A, each based on the total number of carbonate units in the branched polycarbonate. In certain aspects, the polycarbonate can include 30-80 mol%, preferably 50-80 mol%, of high heat aromatic carbonate units derived from 1,1-bis-(4-hydroxyphenyl)-3,3,5-trimethylcyclohexane; and 20-70 mol%, preferably 20-50 mol%, of low heat carbonate units derived from bisphenol A, each based on the total number of carbonate units in the branched polycarbonate.

The branched polycarbonates can have a Tg of 170-260°C, or 170-210-°C, or 170-220°C, each determined by DSC as per ASTM D3418 with a 20°C/min heating rate. In general, lower amounts of the low heat polycarbonate units provide polycarbonates having higher Tgs.

The branched polycarbonates can have an impact resistance (tensile stress at break) of greater than 60 megaPascals (MPa), 10-70 MPa, 20-70 MPa, 30-70 MPa, 40-70 MPa, 50-70MPa, or 60-70MPa.

The branched polycarbonates in some aspects can have a weight average molecular weight (Mw) of 10,000-50,000 grams per mole (g/mol), or 18,000-40,000 g/mol, or 16,000-30,000 g/mol, or 18,000-30,000 g/mol as measured by gel permeation chromatography (GPC), using a crosslinked styrene-divinylbenzene column and calibrated to BPA homopolycarbonate references. GPC samples can be prepared at a concentration of 1 mg per ml and eluted at a flow rate of 1.5 ml per minute.

The branched polycarbonates can be manufactured by processes such as interfacial polymerization and melt polymerization. Although the reaction conditions for interfacial polymerization can vary, an exemplary process generally involves dissolving or dispersing a dihydroxy compound in aqueous NaOH or KOH, adding the resulting mixture to a water-immiscible solvent, and contacting the reactants with a carbonate precursor in the presence of a catalyst such as, for example, a tertiary amine or a phase transfer catalyst, under controlled pH conditions, e.g., 8-, preferably 8.5-11, more preferably 9-10.5. The water-immiscible solvent can be, for example, methylene chloride, 1,2-dichloroethane, chlorobenzene, toluene, and the like.

Alternatively, melt processes can be used to make the polycarbonates. In the melt polymerization process, polycarbonates can generally be prepared by co-reacting, in a molten state, a dihydroxy reactant as described above and a diaryl carbonate ester as described above in the presence of a transesterification catalyst. Conditions for melt process are described, for example, in WO2013/027165 and the references cited therein. Catalysts used in the melt polymerization can include an alpha catalyst and a beta catalyst. Alpha catalysts can comprise a source of alkali or alkaline earth ions and are typically more thermally stable and less volatile than beta catalysts. Beta catalysts are typically volatile and degrade at elevated temperatures and can comprise a transesterification catalyst of the formula (R³)₄Q⁺X as described above. Beta catalysts are therefore preferred for use at early low-temperature polymerization stages. The alpha catalyst can be used in an amount sufficient to provide 1 x 10⁻²-1 x 10⁻⁸ moles, specifically, 1 x 10⁻⁴-1 x 10⁻⁷ moles of metal per mole of the dihydroxy compounds used. The amount of beta catalyst (e.g., organic ammonium or phosphonium salts) can be 1 x 10⁻²-1 x 10⁻⁵, specifically 1 x 10⁻³-1 x 10⁻⁴ moles per total mole of the dihydroxy compounds in the reaction mixture. Quenching of the transesterification catalysts and any reactive catalysts residues with an acidic compound after polymerization is completed can also be useful in some melt polymerization processes. Among the many quenchers that can be used are alkyl sulfonic esters of the formula R⁸SO₃R⁹ wherein R⁸ is hydrogen, C₁₋₁₂ alkyl, C₆₋₁₈ aryl, or C₇₋₁₉ alkylaryl, and R⁹ is C₁₋₁₂ alkyl, C₆₋₁₈ aryl, or C₇₋₁₉ alkylaryl (e.g., benzenesulfonate, p-toluenesulfonate, methylbenzene sulfonate, ethylbenzene sulfonate, n-butyl benzenesulfonate, octyl benzenesulfonate and phenyl benzenesulfonate, methyl p-toluenesulfonate, ethyl p-toluenesulfonate, n-butyl p-toluene sulfonate, octyl p-toluenesulfonate and phenyl p-toluenesulfonate, in particular alkyl tosylates such as n-butyl tosylate).

Thermoplastic compositions comprising the high heat polycarbonate can comprise 10-100 wt%, or 20-80 wt%, or 40-70 wt%, or 85-99.8 wt% of the branched polycarbonate, each based on the total weight of the thermoplastic compositions. In some aspects, no additional polymer other than the branched polycarbonate is present in the thermoplastic compositions. In other aspects, the thermoplastic compositions further comprise a linear polycarbonate different from the branched polycarbonate. The linear polycarbonate can be a homopolycarbonate or a copolycarbonate.

The linear polycarbonate can be a BPA polycarbonate, i.e., a BPA homopolycarbonate or a copolycarbonate including units derived from BPA. The linear BPA homopolycarbonate or BPA copolycarbonate can have an Mw of 10,000-100,000 g/mol, or 15,000-50,000 g/mol, or 17,000-35,000 g/mol, or 20,000-30,000 g/mol as measured by GPC, using a crosslinked styrene-divinylbenzene column and calibrated to linear BPA homopolycarbonate references. GPC samples can be prepared at a concentration of 1 mg per ml and eluted at a flow rate of 1.5 ml per minute. More than one BPA homopolycarbonate or BPA copolycarbonate linear can be present. For example, the thermoplastic compositions can comprise a first BPA homopolycarbonate having an Mw of 20,000-25,000 g/mol and a second linear BPA homopolycarbonate having an Mw of 28,000-32,000 g/mol, or a second BPA homopolycarbonate having an Mw of 16,000-20,000 g/mol, each measured by GPC using BPA homopolycarbonate standards. The weight ratio of the first BPA homopolycarbonate relative to the second BPA homopolycarbonate can be 10:1-1:10, or 5:1-1: 5, or 3:1-1:3, or 2:1-1:2.

In some aspects, the thermoplastic compositions can include a sulfonic acid stabilizer also referred to herein as an "organosulfonic stabilizer." The organosulfonic stabilizer can be an aryl or aliphatic sulfonic acid, including a polymer thereof, an aryl or an aliphatic sulfonic acid anhydride, or an aryl or aliphatic ester of an aryl or aliphatic sulfonic acid, or a polymer thereof. In particular, the organosulfonic stabilizer is a C₁₋₃₀ alkyl sulfonic acid, a C₆₋₃₀ aryl sulfonic acid, a C₇₋₃₀ alkylarylene sulfonic acid, a C₇₋₃₀ arylalkylene sulfonic acid, or an aromatic sulfonic acid polymer; an anhydride of a C₁₋₃₀ alkyl sulfonic acid, a C₆₋₃₀ aryl sulfonic acid, a C₇₋₃₀ alkylarylene sulfonic acid, or a C₇₋₃₀ arylalkylene sulfonic acid; or a C₆₋₃₀ aryl ester of: a C₁₋₃₀ alkyl sulfonic acid, a C₆₋₃₀ aryl sulfonic acid, a C₇₋₃₀ alkylarylene sulfonic acid, a C₇₋₃₀ arylalkylene sulfonic acid, or an aromatic sulfonic acid polymer; or a C₁₋₃₀ aliphatic ester of: a C₁₋₃₀ alkyl sulfonic acid, a C₆₋₃₀ aryl sulfonic acid, a C₇₋₃₀ alkylarylene sulfonic acid, a C₇₋₃₀ arylalkylene sulfonic acid, or an aromatic sulfonic acid polymer. A combination of one or more of the foregoing can be used.

In an aspect, the organosulfonic stabilizer is of formula (6).

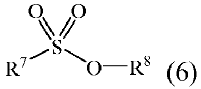

In formula (6), R⁷ is each independently a C₁₋₃₀ alkyl, C₆₋₃₀ aryl, C₇₋₃₀ alkylarylene, C₇₋₃₀ arylalkylene, or a polymer unit derived from a C₂₋₃₂ ethylenically unsaturated aromatic sulfonic acid or its corresponding C₁₋₃₂ alkyl ester. The C₂₋₃₂ ethylenically unsaturated aromatic sulfonic acid can be of the formula 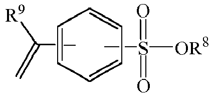 wherein R⁹ is hydrogen or methyl and R⁸ is as defined in formula (6). Preferably the ethylenically unsaturated group and the sulfonic acid or ester group are located para on the phenyl ring.

Further in formula (6), R⁸ is hydrogen; or R⁸ is C₁₋₃₀ alkyl; or R⁸ is a group of the formula -S(=O)₂-R⁷. When R⁸ is a group of the formula -S(=O)₂-R⁷, each R⁷ in the compound of formula (8) can be the same or different, but preferably each R⁷ is the same.

In an aspect in formula (6), R⁷ is a C₆₋₁₂ aryl, C₇₋₂₄ alkylarylene, or a polymer unit derived from a C₂₋₁₄ ethylenically unsaturated aromatic sulfonic acid or its ester; and R⁸ is hydrogen, C₁₋₂₄ alkyl, or a group of the formula -S(=O)₂-R⁷ wherein R⁷ is a C₆₋₁₂ aryl or C₇₋₂₄ alkylarylene. In another aspect in formula (6), R⁷ is a C₇₋₁₀ alkylarylene or a polymer unit derived from a C₂₋₁₄ ethylenically unsaturated aromatic sulfonic acid, and R⁸ is a hydrogen, C₁₋₂₅ alkyl, or a group of the formula -S(=O)₂-R⁷ wherein R⁷ is a C₇₋₁₀ alkylarylene. In still another aspect, R⁷ is a C₇₋₁₀ alkylarylene and R⁸ is a hydrogen or C₁₋₆ alkyl. In still another aspect, R⁷ is a C₇₋₁₀ alkylarylene and R⁸ is a hydrogen or C₁₂₋₂₅ alkyl, or R⁸ is a C₁₄₋₂₀ alkyl. In another aspect, R⁷ is a polymer unit derived from a C₂₋₁₄ ethylenically unsaturated aromatic sulfonic acid, preferably p-styrene sulfonic acid or para-methyl styrene sulfonic acid, such that in formula (6) R⁸ is hydrogen.

The organosulfonic stabilizer can be a C₁₋₁₀ alkyl ester of a C₇₋₁₂ alkylarylene sulfonic acid, preferably of p-toluene sulfonic acid. More preferably the stabilizer is a C₁₋₆ alkyl ester of p-toluene sulfonic acid, such as butyl tosylate. In another aspect, the organosulfonic stabilizer is an anhydride of a C₇₋₁₂ alkylarylene sulfonic acid, preferably para-toluene sulfonic anhydride. In still another aspect, R⁷ is a C₁₁₋₂₄ alkylarylene sulfonic acid, and R⁸ is hydrogen. Alternatively, R⁷ is a C₁₆₋₂₂ alkylarylene sulfonic acid, and R⁸ is hydrogen.

The thermoplastic composition can include various additives ordinarily incorporated into polymer compositions of this type, with the proviso that the additive(s) are selected so as to not significantly adversely affect the desired properties of the thermoplastic composition, in particular viscosity and impact resistance. Such additives can be mixed at a suitable time during the mixing of the components for forming the composition. Additives include impact modifiers, fillers, reinforcing agents, antioxidants, heat stabilizers, light stabilizers, ultraviolet (UV) light stabilizers, plasticizers, lubricants, mold release agents, antistatic agents, colorants such as such as titanium dioxide, carbon black, and organic dyes, surface effect additives, radiation stabilizers, flame retardants, and anti-drip agents. A combination of additives can be used, for example a combination of an antioxidant, a heat stabilizer, mold release agent, and ultraviolet light stabilizer. In general, the additives are used in the amounts generally known to be effective. For example, the total amount of the additives (other than any impact modifier, filler, or reinforcing agents) can be 0.01-5 wt%, based on the total weight of the polycarbonate composition.

The thermoplastic compositions can be manufactured by various methods known in the art. For example, powdered copolycarbonate, and other optional components are first blended, optionally with any fillers, in a high-speed mixer or by hand mixing. The blend is then fed into the throat of a twin-screw extruder via a hopper. Alternatively, at least one of the components can be incorporated into the composition by feeding it directly into the extruder at the throat or downstream through a sidestuffer, or by being compounded into a masterbatch with a desired polymer and fed into the extruder. The extruder is generally operated at a temperature higher than that necessary to cause the composition to flow. The extrudate can be immediately quenched in a water bath and pelletized. The pellets so prepared can be one-fourth inch long or less as desired. Such pellets can be used for subsequent molding, shaping, or forming.

The thermoplastic compositions can be molded under standard molding conditions in range of 300-380°C depending on the Tg of the composition and the residence time in the molding process. For example, the thermoplastic compositions can be molded at a temperature of 100-175°C above the Tg of the thermoplastic composition for a residence time of 2-20 minutes.

The thermoplastic compositions can have a Tg of 170°C or higher , or 170-260°C, determined by DSC in accordance with ASTM D3418 with a 20°C/min heating rate.

The thermoplastic compositions can have excellent transparency. In an aspect, the thermoplastic compositions can have a haze of less than 5%, or less than 3%, or less than 1.5%, or less than 1.0%, and a transmission greater than 82%, preferably greater than 84%, preferably greater than 85%, or greater than 86% each measured as per ASTM D1003-00 using the color space CIE1931 (Illuminant C and a 2° observer) on a molded plaque with a 3.2 mm thickness. In another aspect, the thermoplastic compositions can have a haze of less than 15%, or less than 10%, more preferably less than 5%, even more preferably less than 1.5%, or less than 1.0% and a total transmission greater than 84% or greater than 86%, each measured as per ASTM D1003-00 on a molded plaque with a 3.0 mm thickness.

The thermoplastic compositions can have excellent color. In an aspect, the thermoplastic compositions have a yellowness index (YI) of less than 30, preferably less than 20, more preferably less than 10 measured as per ASTM D1925 on a plaque of 3.2 mm thickness molded at a temperature of 350°C for a residence time of 2 minutes.

The thermoplastic compositions can be used in articles including a molded article, a thermoformed article, an extruded film, an extruded sheet, one or more layers of a multi-layer article, a substrate for a coated article, or a substrate for a metallized article. Optionally, the article has no significant part distortion or discoloration when the article is subjected to a secondary operation such as over-molding, lead-free soldering, wave soldering, low temperature soldering, or coating, or a combination thereof. The articles can be partially or completely coated with, e.g., a hard coat, a UV protective coat, an anti-refractive coat, an anti-reflective coat, a scratch resistant coat, or a combination thereof, or metallized.

Exemplary articles include a lens, a light guide, a waveguide, a collimator, an optical fiber, a window, a door, a visor, a display screen, an electronic device, a scientific or medical device, an autoclavable article, a safety shield, a fire shield, wire or cable sheathing, a mold, a dish, a tray, a screen, an enclosure, glazing, packaging, a gas barrier, an anti-fog layer, or an anti-reflective layer.

The branched polycarbonate compositions can be provided as pellets, and are useful to form lenses via various methods. The methods to make the lenses are not particularly limited. Exemplary methods include part production via multi-cavity tools; molding such as injection molding, gas assist injection molding, vacuum molding, over-molding, compression molding, rotary molding, heat/cool molding, overmolding, transfer molding, or cavity molding; thermoforming; extruding; calendaring; casting; and the like.

Advantageously, the lenses have no significant part distortion or discoloration when the articles are subjected to a secondary operation such as over-molding, or coating with high temperature curing, or a combination thereof. High temperature cure of a coating can be, for example, 100°C or higher, for example 100 to 250°C. In some embodiments, "no significant part distortion" includes a volume distortion of less than 10 volume percent (vol%), or less than 5 vol%, or less than 1 vol%. Significant discoloration can be detected by the unaided eye at a distance of 18 inches. The polycarbonate compositions, which have good flow (MVR) for excellent mold filling properties while maintaining desirable mechanical properties can, in the manufacture of lenses, provide a high degree of reproducibility for successive lenses molded from the polycarbonate composition.

The lens can be a planar (flat) lens, a curved lens, a cylindrical lens, a toric lens, a sphero-cylindrical lens, a fresnel lens, a convex lens, a biconvex lens, a concave lens, a biconcave lens, a convex-concave lens, a plano-convex lens, a plano-concave lens, a lenticular lens, a gradient index lens, an axicon lens, a conical lens, an astigmatic lens, an aspheric lens, a corrective lens, a diverging lens, a converging lens, a compound lens, a photographic lens, a doublet lens, a triplet lens, an achromatic lens, or a multi-array lens. Thus, the lens can be a layer of a multi-layer lens.

The lenses can be defined by several dimensional features such as thickness, effective lens area, diameter of an effective lens area, and an overall diameter. Lens thickness, as defined herein, is measured at the center of the lens (i.e., along the z axis, orthogonal to the diameter of the lens which is measured in the x-y plane of the lens). Since lenses have curvature, the thickness of the lens may vary along the contour of the surface. Also, depending upon the type of the lens (convex, concave, etc.) the variation of the thickness can differ widely. In an embodiment, the lens has a thickness of a thickness of 0.1 mm to 50 cm, or 0.1 mm to 10 cm, 0.1 mm to 1 cm, or 0.1 mm to 0.5 cm, or 0.1 mm to 50 mm, measured at the thickest part of the lens. In a specific embodiment, the lens has a thickness of 0.25 to 2.5 mm, or 0.5 to 2.4 mm, or 0.8 to 2.3 mm, measured at the center of the lens.

The size of the lens is characterized by the term "effective lens area," which is defined as the area of the lens where the curvature is positive, and hence light which is refracted through this area is usable in actual imaging. "Curvature" as defined herein, is the reciprocal of the optical radius of the lens (as defined by the light path). For example, a flat surface has infinite radius and therefore zero curvature. For those lenses that include a flat portion around the periphery of the lens, which is used for mounting the lens into the optical assembly, this flat portion is not considered part of the effective lens area. A typical lens has at least two surfaces, a first and a second surface. On the first (incident) surface, light enters the lens and exits through the second (refractive) surface. One or both of these surfaces may have a curvature. The effective lens area as defined above may be the same for the first and second surfaces, or may be different for the first and second surfaces. Where different, the larger value of the effective surface area for the first and second surfaces is considered to be the effective lens area for the overall lens. The lens can have an effective lens area of 0.2 mm² to 10 m², or 0.2 mm² to 1 m², or 0.2 mm² to 10 cm², or 0.2 mm² to 5 mm², or 0.2 mm² to 100 mm².

Effective lens area diameter as defined herein describes the diameter measured at the outermost periphery of the effective (optically useable) area of the lens; whereas overall diameter of the lens is the diameter which includes the non-optically relevant flat portion. The lenses disclosed herein can have a diameter of an effective lens area of 0.1 mm to 500 cm, or 0.25 mm to 50 cm, or 0.5 mm to 1 cm, or 0.5 mm to 10 mm; or an overall diameter of 0.1 mm to 2 m, or 0.25 mm to 100 cm, or 0.5 mm to 2 cm, or 0.5 mm to 20 mm.

The lens can have an overall diameter of 0.1 mm to 500 cm, or 0.25 mm to 100 cm, or 0.5 mm to 2 cm, or 0.5 mm to 20 mm

The lenses can have surface textures such as a macrotexture, a microtexture, a nanotexture, or a combination thereof on a surface of the lenses. Textures can also be imparted to the lenses using methods known in the art including but not limited to calendaring or embossing techniques. In an embodiment, the lenses can pass through a gap between a pair of rolls with at least one roll having an embossed pattern thereon, to transfer the embossed pattern to a surface of the lenses. Textures can be applied to control gloss or reflection.

The shape of the lenses is not particularly limited. The lenses can also have different types. For example, the lenses can be a flat or planar lens, a curved lens, a cylindrical lens, a toric or sphero-cylindrical lens, a fresnel lens, a convex lens, a biconvex lens, a concave lens, a biconcave lens, a convex-concave lens, a plano-convex lens, a plano-concave lens, a lenticular lens, a gradient index lens, an axicon lens, a conical lens, an astigmatic lens, an aspheric lens, a corrective lens, a diverging lens, a converging lens, a compound lens, a photographic lens, a doublet lens, a triplet lens, an achromatic lens, or a multi-array lens.

The lenses can further comprise an indicia or a coating disposed on at least a portion of one or both sides of the lens to impart additional properties such as scratch resistance, ultra violet light resistance, aesthetic appeal, hydrophilicity, hydrophobicity, and the like. In an embodiment, the coating is a hard coat, a UV protective coat, an anti-refractive coat, an anti-reflective coat, a scratch resistant coat, a hydrophobic coat, a hydrophilic coat, or a combination comprising at least one of the foregoing. Coatings can be applied through standard application techniques such as overmolding, rolling, spraying, dipping, brushing, flow coating, or combinations comprising at least one of the foregoing application techniques.

Depending on the applications, at least a portion of a surface of the lens is metallized in some embodiments. A metal layer can be disposed onto the surface of the lenses with the aid of electrocoating deposition, physical vapor deposition, or chemical vapor deposition or a suitable combination of these methods. Sputtering processes can also be used. The metal layer resulting from the metallizing process (e.g., by vapor deposition) can be 0.001 to 50 micrometers (µm) thick. Chrome, nickel, aluminum, and the like can be listed as examples of vaporizing metals. Aluminum vapor deposition is used in one embodiment as metal vapor deposition. The surface of the molded substrate can be treated with plasma, cleaned, or degreased before vapor deposition in order to increase adhesion.

The lenses can have low birefringence, which means that the lenses can have low light distortion and a better-quality image.

Exemplary lenses include a camera lens, a sensor lens, an illumination lens, a safety glass lens, an ophthalmic corrective lens, or an imaging lens.

The foregoing types of lenses can be used in a wide variety of applications. For example, the camera lens can be a mobile phone camera lens, a table camera lens, a security camera lens, a mobile phone camera lens, a tablet camera lens, a laptop camera lens, a security camera lens, a camera sensor lens, a copier camera lens, or a vehicle camera lens (e.g., an automotive camera lens).

The sensor lens can be a motion detector lens, a proximity sensor lens, a gesture control lens, an infrared sensor lens, or a camera sensor lens.

The illumination lens can be an indoor lighting lens, an outdoor lighting lens, vehicle headlamp lens, a vehicle foglight lens, a vehicle rearlight lens, a vehicle running light lens, a vehicle foglight lens, a vehicle interior lens, a light emitting diode (LED) lens, or an organic light emitting diode (OLED) lens.

The safety glass lens is a glasses lens, a goggles lens, a visor, a helmet lens, or other protective gear.

The ophthalmic corrective lens can be incorporated into monocles, corrective glasses (including bifocals, trifocals, progressive lens, and the like), contact lenses, and the like.

The imaging lens can be a scanner lens, a projector lens, a magnifying glass lens, a microscope lens, a telescope lens, a security lens, reading glasses lens, and the like.

Accordingly, the lenses can be incorporated into a wide variety of devices, including a camera (including reflex cameras), an electronic device (such as mobile phones, tablets, laptop computers, and desk computers), a vehicle (which as used herein refers to any transportation devices, for example bicycles, scooters, motorcycles, automobiles, buses, trains, boats, ships, and aircraft) a flashlight, a business machine (such as a copier or a scanner), a lighting device (including indoor lighting such as table lamps and ceiling lights, outdoor lighting such as floodlights and streetlights, vehicle headlights, rearlights, side lights, running lights, foglights, and interior lights), an imaging device (such as a microscope, a telescope, a projector, a security lens (e.g. in a door), or reading glasses), a safety article (such as goggles, glasses, and headgear such as helmets), a vision corrective article (glasses or contact lens), or a toy.

This disclosure is further illustrated by the following examples, which are nonlimiting.

### EXAMPLES

The materials used in these examples are shown in Table 1.

**Table 1.**

| Component | Description (trade name) | Supplier |
|---|---|---|
| PPPBP-BPA (35-65) | Copolycarbonate having 35 mol% 2,3-dihydro-3,3-bis(4-hydroxyphenyl)-2-phenyl-1H-isoindol-1-one (PPPBP) units and 65 mol% bisphenol A (BPA) units, Mw = 24,000-26,000 grams/mole; obtained as LEXAN XHT | SABIC |
| THPE | Tris-p-hydroxy phenyl ethane | Sigma Aldrich |
| PPPBP-BPA (35/65) (1.17 THPE) | Copolycarbonate made by interfacial polymerization, having 35 mol% PPPBP units and 65 mol% BPA units, Mw = 22,000-23,000 g/mole, branched using 1.17 mol% THPE | SABIC |
| PPPBP-BPA (35/65) (2.34 THPE) | Copolycarbonate made by interfacial polymerization, having _ mol% PPPBP units and 65 mol% BPA units, Mw = 21,000-23,000 g/mole, branched using 2.34 mol% THPE | SABIC |
| BPA-1 | Bisphenol A homopolycarbonate, CAS Reg. No. 111211-39-3, p-cumyl phenol endcapped, Mw = 21,000-22,000 g/mol, having a melt flow rate of 28 grams per 10 minutes at 300°C and 1.2 kg load | SABIC |
| BPA-2 | Bisphenol A homopolycarbonate, CAS Reg. No. 111211-39-3, p-cumyl phenol endcapped, Mw = 30,000-31,000 g/mol , having a melt flow rate of 7 grams per 10 minutes at 300°C and 1.2 kg load | SABIC |
| BPA-3 | Bisphenol A homopolycarbonate, CAS Reg. No. 111211-39-3, p-cumyl phenol endcapped, Mw = 18,000-19,000 g/mol, having a melt flow rate of 65 grams per 10 minutes at 300°C and 1.2 kg load | SABIC |

Spiral flow length was measured using a 120-ton VanDorn molding machine. The resin was dried at 250 °F for 4 hrs. The barrel temperatures were 630 °F in all zones and the mold temperature was 250 °F. The screw speed was set at 60 rpm and the injection speed was 6 in/s. The channel depth was 60 mil. After the molding was on cycle and stabilized, 5 spirals were molded. The spiral lengths were measured and the average of 5 was reported.

Tensile stress at break was measured according to ISO 527.

### Examples 1 and 2

The compositions as shown in Table 2 were prepared by combining the various components in the melt. All the formulations were dry blended with 0.06 wt% of a phosphite stabilizer and mixed in a paint shaker. The blends were extruded on 26 mm Werner & Pfleiderer co-rotating twin-screw extruder with barrel temperatures set points ramped from 540 to 620°F (feed to die throat), vacuum venting and a screw speed of 300 rpm. The extrudate was cooled in a water bath and then chopped into pellets for testing and molding. The twin-screw extruder had enough distributive and dispersive mixing elements to produce good mixing between the polymer compositions. The compositions are subsequently molded on a 180-ton injection molding machine with a 5.25-ounce barrel. The resin blends were molded at 630°F after drying for 4 hours at 250°F with an approximate 35 sec cycle time. An oil-thermolator was used to heat cavity and core sides of the mold to a surface temperature of 250°F though it will be recognized by one skilled in the art that the method cannot be limited to these temperatures.

The compositions were evaluated for spiral flow length. The data was then analyzed by DESIGN EXPERT software.

**Table 2.**

| Components | Unit | Sample Number | | | | | | | | | | | | | | |
|---|---|---|---|---|---|---|---|---|---|---|---|---|---|---|---|---|
| | | 1* | 2 | 3 | 4 | 5 | 6 | 7 | 8 | 9* | 10 | 11 | 12 | 13* | 14* | 15 |
| PPPBP-BPA (35/65) | wt% | 82 | | | | | | | | 82 | | | | 82 | 82 | |
| PPPBP-BPA (35/65) (1.17 THPE) | wt% | | | 82 | | 82 | 82 | 82 | 82 | | 82 | | 82 | | | |
| PPPBP-BPA (35/65) (2.34 THPE) | wt% | | 82 | | 82 | | | | | | | 82 | | | | 82 |
| BPA-1 | wt% | 18 | | 9 | 9 | 18 | | 9 | 9 | 9 | 9 | 18 | | | | |
| BPA-2 | wt% | | 18 | 9 | 9 | | 18 | 9 | 9 | 9 | 9 | | | 18 | | |
| BPA-3 | wt% | | | | | | | | | | | | 18 | | 18 | 18 |

| Properties | | | | | | | | | | | | | | | | |
|---|---|---|---|---|---|---|---|---|---|---|---|---|---|---|---|---|
| Molecular Weight | kDa | 21.1 | 30.3 | 25.7 | 25.7 | 21.1 | 30.3 | 25.7 | 25.7 | 25.7 | 25.7 | 21.1 | 18.4 | 30.3 | 18.4 | 18.4 |
| MFI *of PC (Estimated) | | 28 | 7 | 10 | 10 | 28 | 7 | 10 | 10 | 10 | 10 | 29 | 65 | 7 | 65 | 65 |

| | | | | | | | | | | | | | | | | |
|---|---|---|---|---|---|---|---|---|---|---|---|---|---|---|---|---|
| *Melt flow index, g/10 minutes | | | | | | | | | | | | | | | | |

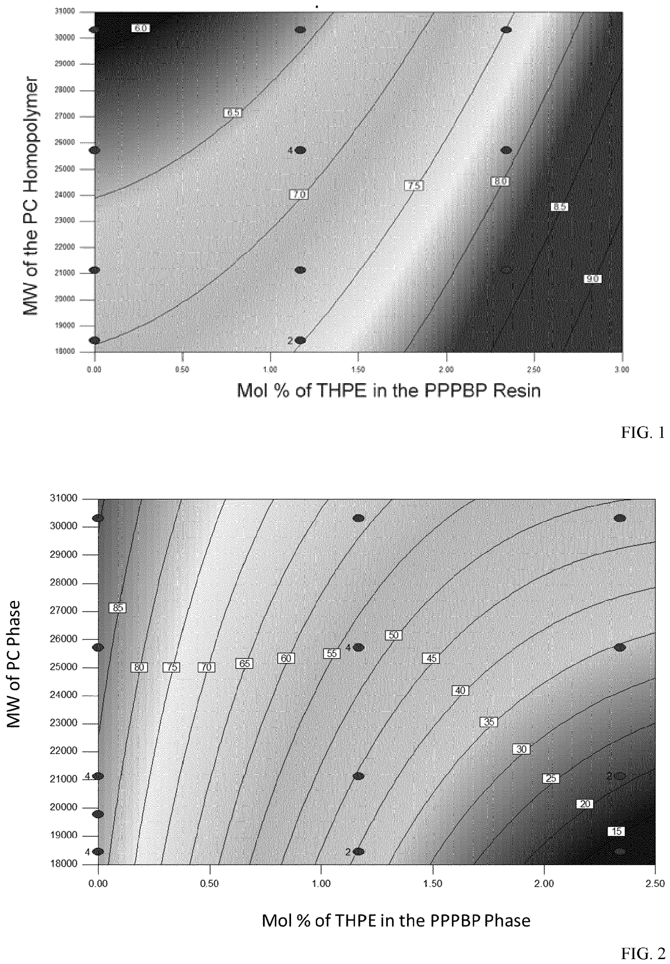

The result of the data analysis of spiral flow for the Examples of Table 2 is shown in FIG. 1, plotting spiral flow where the two variables are the amount of THPE in the branched PPPBP-BPA copolycarbonate (X-axis) and the molecular weight of the blend of the branched copolycarbonate and the linear BPA polycarbonate (Y-axis). FIG. 1 shows that increasing the molecular weight of the BPA homopolycarbonate blended into the non-branched PPPBP-BPA copolycarbonate increases flow slightly, from 3.2 inches (0 mol% THPE, 30,000 g/mol BPA) to 3.9 inches (0 mol% THPE, 23,000 g/mol BPA). Use of a branched PPPBP-BPA copolycarbonate, on the other hand, results in an increase in flow with increasing branching, even with a lower molecular weight BPA homopolycarbonate, for example from 3.9 inches (0 mol% THPE, 23,000 g/mol BPA) to 4.5 inches (1.17 mol% THPE, 23,000 g/mol BPA) to 5.4 inches (2.34 mol% THPE, 23,000 g/mol BPA).

The result of the data analysis of toughness, as illustrated by ASTM D256 NII, is shown in FIG. 2, plotting NII where the two variables are the amount of THPE in the branched PPPBP-BPA copolycarbonate (X-axis) and the molecular weight of the BPA homopolycarbonate (Y-axis). As shown in FIG. 2, THPE levels up to 2.11 mol% provide an acceptable impact level, which is benchmarked as greater than 32 J/m. Below 32 J/m, the parts could be too brittle to survive manufacturing, assembly, or use, for example. Thus, surprisingly, THPE levels of less than or equal to 2.11 mol% gave sufficient ductility for most applications including headlight reflectors. Therefore, as calculated, to provide significant levels of improved flow while maintaining suitable toughness, THPE levels of 0.37-2.11 mol% can be used. Examples 3 and 4

A modelling approach was used to determine the entanglement molecular weight (Me) as a function of the amount of PPPBP or BPI monomer and amount of the branching agent in the PPPPBP-BPA or BPA-BPI copolycarbonate, respectively. The results of the calculation for mol% high heat monomer are shown in Table 3 and plotted in FIG. 3. The modelling used a molecular constitutive equation that used the chain architecture as an input. The calculations were performed using a non-commercially available program that can be described as a three-part calculation. The first part involves calculation of the structural parameters using Bicerano's approach. These parameters were constant for a given back bone structure or co-polymer composition. The second part involved the calculation of the molecular weight distribution and the chain population using a Monte Carlo method. Both these steps were input into a molecular constitutive model to calculate the viscoelastic properties.

**Table 3.**

| Entanglement Molecular Weight (g/mol) | | |
|---|---|---|
| High heat monomer (mol%) | PPPBP-BPA | BPA-BPI |
| 0 | 1853.532 | 1853.532 |
| 10 | 2079.697 | 2056.838 |
| 20 | 2333.458 | 2297.206 |
| 30 | 2618.183 | 2565.665 |
| 40 | 2937.65 | 2865.497 |
| 50 | 3296.097 | 3200.369 |
| 60 | 3698.282 | 3574.374 |
| 70 | 4149.54 | 3992.087 |
| 80 | 4655.861 | 4458.615 |
| 90 | 5223.962 | 4979.664 |
| 100 | 5861.382 | 5561.603 |

Table 3 and FIG. 3 show the change in Mₑ as a function of increasing high heat monomer content. For both PPPBP and BPI, as the mol% of each PPP and BPI increased, calculated Mₑ increased. Without being bound by theory, it is believed that increasing the levels of BPI or PPPBP results in a lesser number of entanglements and therefore can affect the flow and mechanical properties such as impact.

The effect of branching on the impact resistance (tensile stress at break) for a branched linear BPA homopolycarbonate (Mw 29 kDa) was calculated and the results are shown in Table 4.

**Table 4**

| THPE level (mol%) | Stress at Break (MPa) |
|---|---|
| 0 | 80 |
| 0.1 | 78 |
| 0.2 | 76 |
| 0.4 | 75 |
| 0.8 | 72 |
| 1.6 | 65 |
| 3.2 | 52 |

Table 5 and FIGS. 4A and 4B show the calculated viscosity reponse of PPPBP-BPA copolymers with varying molecular weights and varying mol% of THPE. Table 5 also shows the shear thinning index, which is the ratio of zero-shear viscosity to high-shear viscosity.

**Table 5. Viscosity response of PPPBP-BPA copolymers**

| THPE level (mol%) | Mw (kDa) | BPA/PPPPBP (mol%/mol%) | Viscosity | | | Stress at Break (MPa) |
|---|---|---|---|---|---|---|
| | | | Zero-shear viscosity | High-shear viscosity (1500 s⁻¹) | Shear thinning index | |
| 0 | 29-30 | 67/33 | 1769.51 | 312.366 | 5.7 | |
| 0.1 | 29-30 | 67/33 | 2392.408 | 29-301.5805 | 8.2 | |
| 0.2 | 29-30 | 67/33 | 35.725 | 301.7517 | 10.9 | |
| 0.4 | 29-30 | 67/33 | 3806.313 | 280.8422 | 13.6 | |
| 0.8 | 29-30 | 67/33 | 3906.901 | 244.403 | 16.0 | |
| 1 | 29-30 | 67/33 | 3450 | 210 | 16.4 | |
| 1.6 | 29-30 | 67/33 | 2796.558 | 178.3055 | 15.7 | |
| 3.2 | 29-30 | 67/33 | 1687.042 | 108.5305 | 15.5 | |
| 0 | 21-22 | 67/33 | 589.8367 | 208.244 | 2.8 | 65 |
| 0.1 | 21-22 | 67/33 | 797.4692 | 201.1678 | 4.1 | 64 |
| 0.2 | 21-22 | 67/33 | 1098.575 | 194.387 | 5.5 | 64 |
| 0.4 | 21-22 | 67/33 | 1268.771 | 187.2281 | 6.8 | 62 |
| 0.8 | 21-22 | 67/33 | 1302.3 | 162.9353 | 8.0 | 60 |
| 1 | 21-22 | 67/33 | 1150 | 140 | 8.2 | |
| 1.6 | 21-22 | 67/33 | 932.1859 | 118.8703 | 7.8 | 52 |
| 3.2 | 21-22 | 67/33 | 562.3473 | 72.35368 | 7.8 | 40 |
| 0 | 29-30 | 55/45 | 3478.406 | 373.9933 | 9.3 | |
| 0.1 | 29-30 | 55/45 | 3869.699 | 364.29-3072 | 10.6 | |
| 0.2 | 29-30 | 55/45 | 4250.32 | 347.4351 | 12.2 | |
| 0.4 | 29-30 | 55/45 | 4299.194 | 327.8877 | 13.1 | |
| 0.8 | 29-30 | 55/45 | 4447.314 | 288.0668 | 15.4 | |
| 1 | 29-30 | 55/45 | 3999 | 259.5 | 15.4 | |
| 1.6 | 29-30 | 55/45 | 3343.798 | 230.4373 | 14.5 | |
| 3.2 | 29-30 | 55/45 | 1868.462 | 163.4413 | 11.4 | |
| 0 | 21-22 | 55/45 | 1159.469 | 249.3289 | 4.7 | 50 |
| 0.1 | 21-22 | 55/45 | 1289.9 | 242.8648 | 5.3 | 48 |
| 0.2 | 21-22 | 55/45 | 1416.773 | 231.6234 | 6.1 | 47 |
| 0.4 | 21-22 | 55/45 | 1482.438 | 218.5918 | 6.6 | 44 |
| 0.8 | 21-22 | 55/45 | 1433.065 | 192.0445 | 7.7 | 40 |
| 1 | 21-22 | 55/45 | 1333 | 173 | 7.7 | |
| 1.6 | 21-22 | 55/45 | 1114.599 | 153.6248 | 7.3 | 32 |
| 3.2 | 21-22 | 55/45 | 622.8207 | 108.9609 | 5.7 | 20 |

As can be seen from Table 5 and FIG. 4A, increasing the mol% of THPE (and thus branching of the copolycarbonate) increased the zero-shear viscosity initially, followed by a decrease. Without being bound by theory, it is believed that the initial viscosity increase can be attributed to sparse long chain branching, and the subsequeent decrease was due to hyperbranching. However, as shown in FIG. 4B, the increasing branching levels also continuously decreased the high shear viscosity (1500 sec⁻¹). Without being bound by theory, the trend in high shear viscosity for PPPBP-BPA (FIG. 4B) can be explained by the higher Mₑ of PPPBP-BPA copolymers with higher ratios of the high heat monomer. The shear thinning index increased with increasing molecular weight of the copolymer. The impact resistance (Tg at break) is maintained with increasing mol% THPE and decreases at 1.6 mol% and 3.2 mol%.

Table 6 and FIGS. 5A and 5B show the calculated viscosity response of BPA-BPI copolymers with varying molecular weights and varying mol% of THPE as a branching agent.

**Table 6. Viscosity response of BPA-BPI copolymers**

| THPE (mol %) | Mw (kDa) | BPA-BPI (mol%/mol%) | Viscosity | | | Stress at Break (MPa) |
|---|---|---|---|---|---|---|
| | | | Zero-shear viscosity | High-shear viscosity (1500 s⁻¹) | Shear thinning index | |
| 0 | 29-30 | 43/57 | 587.5669 | 257.0823 | 2.3 | 20 |
| 0.1 | 29-30 | 43/57 | 752.9662 | 238.6347 | 3.2 | 18 |
| 0.2 | 29-30 | 43/57 | 815.5474 | 238.797 | 3.4 | 17 |
| 0.4 | 29-30 | 43/57 | 926.3787 | 217.7568 | 4.3 | 15 |
| 0.8 | 29-30 | 43/57 | 1087.226 | 178.2949 | 6.1 | 12 |
| 1 | 30-31 | 43/58 | 830 | 157 | 5.3 | |
| 1.6 | 29-30 | 43/57 | 569.1966 | 135.0361 | 4.2 | 10 |
| 3.2 | 29-30 | 43/57 | 313.3309 | 81.02869 | 3.9 | 5 |
| 0 | 21-22 | 43/57 | 195.85564 | 717.3882 | 1.1 | |
| 0.1 | 21-22 | 43/57 | 250.98874 | 159.0898 | 1.6 | |
| 0.2 | 21-22 | 43/57 | 271.84913 | 159.198 | 1.7 | |
| 0.4 | 21-22 | 43/57 | 308.79289 | 145.1712 | 2.1 | |
| 0.8 | 21-22 | 43/57 | 362.40882 | 118.8632 | 3.0 | |
| 1 | 222-23 | 43/58 | 276.66667 | 104.6667 | 2.6 | |
| 1.6 | 21-22 | 43/57 | 189.73220 | 90.02408 | 2.1 | |
| 3.2 | 21-22 | 43/57 | 104.44363 | 54.01913 | 1.9 | |
| 0 | 29-30 | 25/75 | 2004.044 | 399.1155 | 5.0 | 10 |
| 0.1 | 29-30 | 25/75 | 3379.140 | 382.9414 | 8.8 | 10 |
| 0.2 | 29-30 | 25/75 | 3927.180 | 362.8806 | 10.8 | 9 |
| 0.4 | 29-30 | 25/75 | 4124.098 | 336.7602 | 12.2 | 9 |
| 0.8 | 29-30 | 25/75 | 4615.083 | 294.9041 | 15.6 | 9 |
| 1 | 30-31 | 25/76 | 4340 | 266 | 16.3 | |
| 1.6 | 29-30 | 25/75 | 4061.943 | 235.8812 | 17.2 | 5 |
| 3.2 | 29-30 | 25/75 | 2271.843 | 151.7727 | 15.0 | 0.5 |
| 0 | 21-22 | 25/75 | 668.0147 | 266.077 | 2.5 | |
| 0.1 | 21-22 | 25/75 | 1126.380 | 255.2942 | 4.4 | |
| 0.2 | 21-22 | 25/75 | 1309.060 | 241.9204 | 5.4 | |
| 0.4 | 21-22 | 25/75 | 1265.607 | 239.0554 | 5.3 | |
| 0.8 | 21-22 | 25/75 | 1340.347 | 208.2413 | 6.4 | |
| 1 | 22-23 | 25/76 | 1340.347 | 208.2413 | 6.4 | |
| 1.6 | 21-22 | 25/75 | 1196.974 | 165.3923 | 7.2 | |
| 3.2 | 21-22 | 25/75 | 757.28 | 101.1818 | 7.5 | |

As can be seen from Table 6 and FIG. 5A, increasing the mol% of THPE (and thus branching of the copolycarbonate) increased the zero-shear viscosity initially, followed by a decrease. However, as shown in FIG. 5B, the increasing branching levels also continuously decreased the high shear viscosity (1500 sec⁻¹). The trend in high shear viscosity for BPA-BPI (FIG. 5B) can be explained by the higher Mₑ for BPA-BPI copolymers with increasing mol% of BPI. The shear thinning index increased with increasing molecular weight of the copolymer. The impact resistance (tensile stress at break) is maintained with increasing mol% THPE and decreases at 1.6 mol% and 3.2 mol%.

### Example 5.

FIGS. 6A-6C show plots of complex viscosity (η*) versus frequency (ω) of BPA-BPI copolycarbonates with varying mol% of THPE. FIG. 6A shows the calculated viscoelastic response for a BPA-BPI (25/75) copolycarbonate having an Mw of 21-22 kDa, with 0.2, 0.4. 0.6, 0.8, 1.6, 2.0. or 3.0 mol% THPE. FIG. 6B shows the results for a BPA-BPI(25/75) copolycarbonate having an Mw of 29-30kDa with 0, 0.6, or 2.3 mol% THPE. The experimental values were consistent with the simulated values. FIG. 6C shows the results for a BPA/BPI(43/57) copolycarbonate having an Mw of 29-30 kDa, with 0.1, 0.2, 0.4, 0.8, 1.6, or 3.2 mol% THPE. For a given backbone structure and composition, the structural parameters were held constant and the viscoelastic response was calculated for the branched polymers. The decrease in viscosity for each sample can be attributed to hyperbranching. For the BPA-BPI copolymer, hyperbranching was observed at 0.75 mol% THPE.

FIGS. 7A-7B show plots of complex viscosity (η*) as a function of frequency (ω) for PPPBP-BPA copolycarbonates with varying mol% of THPE. The experimental values were consistent with the simulated values. FIG. 7A shows the calculated viscoelastic response for a PPPBP-BPA (33/67) copolycarbonate having an Mw of 21-22 kDa, with 0, 0.1, 0.4, 1.6, or 3.2 mol% THPE. FIG. 7B shows the calculated viscoelastic response for a PPPBP-BPA (45/55) copolycarbonate having an Mw of 21-22 kDa, with 0, 0.2, 0.8, 1.6, or 3.2 mol% THPE for a given backbone structure and composition, the structural parameters were held constant and the viscoelastic response was calculated for the branched polymers. The decrease in viscosity for each sample can be attributed to hyperbranching. For the PPPBP-BPA copolymer, hyperbranching was observed at 0.8 mol% THPE.

### Example 6.

The effect of increasing the mol% of the high heat monomer (i.e., PPPBP and BPI) of the copolycarbonates PPPBP-BPA and BPA-BPI on the amount of branching agent needed for the onset of hyperbranching was investigated. FIG. 8 and Table 7 show the mol% of THPE needed for the onset of hyperbranching for the BPA-BPI and PPPBP-BPA copolycarbonates compared to a BPA homopolycarbonate (PC) and a polyetherimide (PEI; ULTEM, available from SABIC). As the mol% of high heat monomer in the PPPBP and BPI copolycarbonates increases, the mol% of THPE needed for the onset of hyperbranching decreases. The onset of hyperbranching for the PC and PEI polycarbonates was at 2.0 and 2.2 mol% THPE, respectively.

**Table 7.**

| Mol% high heat monomer | Mol% THPE in BPA-BPI | Mol% THPE in PPPBP-BPA | PC | PEI |
|---|---|---|---|---|
| 0 | 2 | 2 | 2 | 2.2 |
| 10 | 1.8 | 1.7 | | |
| 20 | 1.5 | 1.4 | | |
| 30 | 1.4 | 1.1 | | |
| 40 | 1.25 | 0.8 | | |
| 50 | 1.05 | 0.6 | | |
| 60 | 0.85 | 0.55 | | |
| 70 | 0.75 | 0.5 | | |
| 80 | 0.68 | 0.47 | | |
| 90 | 0.6 | 0.42 | | |
| 100 | 0.5 | 0.4 | | |

This disclosure further encompasses the following aspects.
Aspect 1: A branched polycarbonate comprising: high heat aromatic carbonate units derived from a high heat aromatic dihydroxy monomer units; optionally, low heat carbonate units derived from low heat monomer units; and 0.05-1.5 mole percent, preferably 0.05-1.0 mole percent, of a branching agent based on the total number of moles in the branched polycarbonate; wherein the branched polycarbonate has a tensile stress at break of 10-70 megaPascals measured according to ISO 527, and a glass transition temperature of 170-260°C measured by differential scanning calorimetry according to ASTM D3418 with a 20°C/min heating rate.
Aspect 2: The branched polycarbonate of aspect 1, wherein the high heat aromatic carbonate units are derived from 2-phenyl-3,3-bis(4-hydroxyphenyl)phthalimidine, 1,1-bis-(4- hydroxyphenyl)-3,3,5-trimethylcyclohexane, or a combination thereof; and the low heat carbonate units are present, and preferably wherein the low heat carbonate units are derived from bisphenol A.
Aspect 3: The branched polycarbonate of any one or more of the preceding aspects, wherein the polycarbonate comprises 20-80 mole percent, of the high heat aromatic carbonate units; and 20-80 mole percent, of the low heat carbonate units, each based on the total number of carbonate units in the branched polycarbonate.
Aspect 4: The branched polycarbonate of any one or more of the preceding aspects, wherein the polycarbonate comprises 20-60 mole percent, preferably 30-50 mole percent, of high heat aromatic carbonate units derived from 2-phenyl-3,3-bis(4-hydroxyphenyl)phthalimidine, and 40-80 mole percent, preferably 50-70 mole percent, of low heat carbonate units derived from bisphenol A, each based on the total number of carbonate units in the branched polycarbonate.
Aspect 5: The branched polycarbonate of any one or more of the preceding aspects, wherein the polycarbonate comprises 30-80 mole percent, preferably 50-80 mole percent, of high heat aromatic carbonate units derived from 1,1-bis-(4-hydroxyphenyl)-3,3,5-trimethylcyclohexane; and 20-70 mole percent, preferably 20-50 mole percent, of low heat carbonate units derived from bisphenol A, each based on the total number of carbonate units in the branched polycarbonate.
Aspect 6: The branched polycarbonate of any one or more of the preceding aspects, wherein the branching agent is the branching agent is trimellitic acid, trimellitic anhydride, trimellitic trichloride, tris-p-hydroxy phenyl ethane, isatin-bis-phenol, 1,3,5-tris((p-hydroxyphenyl)isopropyl)benzene, (4(4(1,1-bis(p-hydroxyphenyl)-ethyl)alpha,alpha-dimethyl benzyl)phenol), 4-chloroformyl phthalic anhydride, trimesic acid, benzophenone tetracarboxylic acid, or a combination thereof, preferably wherein the branching agent is tris-p-hydroxy phenyl ethane.
Aspect 7: A method of preparing the branched polycarbonate of any one or more of the preceding aspects, the method comprising polymerizing high heat aromatic dihydroxy monomer units, preferably 2-phenyl-3,3-bis(4-hydroxyphenyl)phthalimidine,1,1-bis-(4-hydroxyphenyl)-3,3,5-trimethylcyclohexane, or a combination thereof; optionally, low heat monomer units, preferably bisphenol A; and 0.05-1.5 mole percent of a branching agent, preferably 0.05-1.0 mole percent, based on the total number of moles in the branched polycarbonates.
Aspect 8: The method of aspect 7, wherein the polymerization is interfacial polymerization.
Aspect 9: A thermoplastic composition comprising the branched polycarbonate of any one or more of the preceding aspects, a linear polycarbonate, optionally, an organosulfonic stabilizer, and an additive, where the additive comprises an impact modifier, a filler, an ionizing radiation stabilizer, an antioxidant, a heat stabilizer, a light stabilizer, an ultraviolet light absorber, a plasticizer, a lubricant, a mold release agent, an antistatic agent, a pigment, a dye, a flame retardant, an anti-drip agent, a phosphite stabilizer, or a combination thereof, preferably wherein the additive comprises a mold release agent, a heat stabilizer, a light stabilizer, an antioxidant, or a combination thereof.
Aspect 10: The thermoplastic composition of aspect 9, wherein the linear polycarbonate comprises a bisphenol A polycarbonate, preferably a bisphenol A homopolycarbonate.
Aspect 11: The thermoplastic composition of aspect 9 or aspect 10, wherein the organosulfonic stabilizer is present.
Aspect 12: An article comprising the thermoplastic composition of any one of aspects 9-11, preferably a molded article, a thermoformed article, an extruded film, an extruded sheet, a foamed article, a layer of a multi-layer article, a substrate for a coated article, or a substrate for a metallized article.
Aspect 13: The article of aspect 12, wherein the article is a lens.
Aspect 14: A method of manufacture the article of aspect 12 or aspect 13 comprising molding, extruding, foaming, or casting the thermoplastic composition to form the article, preferably injection molding the thermoplastic composition.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other (e.g., ranges of "up to 25 wt.%, or, more specifically, 5 wt.%-20 wt.%", is inclusive of the endpoints and all intermediate values of the ranges of "5 wt.%-25 wt.%," etc.). "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity and are to be construed to cover both the singular and the plural, unless otherwise indicated herein or clearly contradicted by context. "Or" means "and/or" unless clearly stated otherwise. Reference throughout the specification to "an aspect" means that a particular element described in connection with the aspect is included in at least one embodiment described herein, and may or may not be present in other aspects. In addition, it is to be understood that the described elements may be combined in any suitable manner in the various aspects. A "combination thereof' is open and includes any combination comprising at least one of the listed components or properties optionally together with a like or equivalent component or property not listed.

Unless specified to the contrary herein, all test standards are the most recent standard in effect as of the filing date of this application, or, if priority is claimed, the filing date of the earliest priority application in which the test standard appears.

Unless defined otherwise, technical, and scientific terms used herein have the same meaning as is commonly understood by one of skill in the art to which this application belongs. All cited patents, patent applications, and other references are incorporated herein by reference in their entirety. However, if a term in the present application contradicts or conflicts with a term in the incorporated reference, the term from the present application takes precedence over the conflicting term from the incorporated reference.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

The term "alkyl" means a branched or straight chain, unsaturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo groups (e.g., bromo and fluoro), or only chloro groups can be present. The prefix "hetero" means that the compound or group includes at least one ring member that is a heteroatom (e.g., 1,2, or 3 heteroatom(s)), wherein the heteroatom(s) is each independently N, O, S, Si, or P. "Substituted" means that the compound or group is substituted with at least one (e.g., 1, 2, 3, or 4) substituents that can each independently be a C₁₋₉ alkoxy, a C₁₋₉ haloalkoxy, a nitro (-NO₂), a cyano (-CN), a C₁₋₆ alkyl sulfonyl (-S(=O)₂-alkyl), a C₆₋₁₂ aryl sulfonyl (-S(=O)₂-aryl)a thiol (-SH), a thiocyano (-SCN), a tosyl (CH₃C₆H₄SO₂-), a C₃₋₁₂ cycloalkyl, a C₂₋₁₂ alkenyl, a C₅₋₁₂ cycloalkenyl, a C₆₋₁₂ aryl, a C₇₋₁₃ arylalkylene, a C₄₋₁₂ heterocycloalkyl, and a C₃₋₁₂ heteroaryl instead of hydrogen, provided that the substituted atom's normal valence is not exceeded. The number of carbon atoms indicated in a group is exclusive of any substituents. For example -CH₂CH₂CN is a C₂ alkyl group substituted with a nitrile.

While particular aspects have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A branched polycarbonate comprising:
high heat aromatic carbonate units derived from a high heat aromatic dihydroxy monomer units;
optionally, low heat carbonate units derived from low heat monomer units; and
0.05-1.5 mole percent, preferably 0.05-1.0 mole percent, of a branching agent based on the total number of moles in the branched polycarbonate;
wherein the branched polycarbonate has
a tensile stress at break of 10-70 megaPascals measured according to ISO 527, and
a glass transition temperature of 170-260°C measured by differential scanning calorimetry according to ASTM D3418 with a 20°C/min heating rate.

2. The branched polycarbonate of claim 1, wherein
the high heat aromatic carbonate units are derived from 2-phenyl-3,3-bis(4-hydroxyphenyl)phthalimidine, 1,1-bis-(4-hydroxyphenyl)-3,3,5-trimethylcyclohexane, or a combination thereof; and
the low heat carbonate units are present, and preferably wherein the low heat carbonate units are derived from bisphenol A.

3. The branched polycarbonate of any one or more of the preceding claims, wherein the polycarbonate comprises
20-80 mole percent, of the high heat aromatic carbonate units; and
20-80 mole percent, of the low heat carbonate units,
each based on the total number of carbonate units in the branched polycarbonate.

4. The branched polycarbonate of any one or more of the preceding claims, wherein the polycarbonate comprises
20-60 mole percent, preferably 30-50 mole percent, of high heat aromatic carbonate units derived from 2-phenyl-3,3-bis(4-hydroxyphenyl)phthalimidine, and
40-80 mole percent, preferably 50-70 mole percent, of low heat carbonate units derived from bisphenol A, each based on the total number of carbonate units in the branched polycarbonate.

5. The branched polycarbonate of any one or more of the preceding claims, wherein the polycarbonate comprises
30-80 mole percent, preferably 50-80 mole percent, of high heat aromatic carbonate units derived from 1,1-bis-(4-hydroxyphenyl)-3,3,5-trimethylcyclohexane; and
20-70 mole percent, preferably 20-50 mole percent, of low heat carbonate units derived from bisphenol A, each based on the total number of carbonate units in the branched polycarbonate.

6. The branched polycarbonate of any one or more of the preceding claims, wherein the branching agent is the branching agent is trimellitic acid, trimellitic anhydride, trimellitic trichloride, tris-p-hydroxy phenyl ethane, isatin-bis-phenol, 1,3,5-tris((p-hydroxyphenyl)isopropyl)benzene, (4(4(1,1-bis(p-hydroxyphenyl)-ethyl)alpha,alpha-dimethyl benzyl)phenol), 4-chloroformyl phthalic anhydride, trimesic acid, benzophenone tetracarboxylic acid, or a combination thereof, preferably wherein the branching agent is tris-p-hydroxy phenyl ethane.

7. A method of preparing the branched polycarbonate of any one or more of the preceding claims, the method comprising polymerizing
high heat aromatic dihydroxy monomer units, preferably 2-phenyl-3,3-bis(4-hydroxyphenyl)phthalimidine,1,1 -bis-(4- hydroxyphenyl)-3,3,5-trimethylcyclohexane, or a combination thereof;
optionally, low heat monomer units, preferably bisphenol A; and
0.05-1.5 mole percent of a branching agent, preferably 0.05-1.0 mole percent, based on the total number of moles in the branched polycarbonates.

8. The method of claim 7, wherein the polymerization is interfacial polymerization.

9. A thermoplastic composition comprising
the branched polycarbonate of any one or more of the preceding claims,
a linear polycarbonate,
optionally, an organosulfonic stabilizer, and
an additive, where the additive comprises an impact modifier, a filler, an ionizing radiation stabilizer, an antioxidant, a heat stabilizer, a light stabilizer, an ultraviolet light absorber, a plasticizer, a lubricant, a mold release agent, an antistatic agent, a pigment, a dye, a flame retardant, an anti-drip agent, a phosphite stabilizer, or a combination thereof.
preferably wherein the additive comprises a mold release agent, a heat stabilizer, a light stabilizer, an antioxidant, or a combination thereof.

10. The thermoplastic composition of claim 9, wherein the linear polycarbonate comprises a bisphenol A polycarbonate, preferably a bisphenol A homopolycarbonate.

11. The thermoplastic composition of claim 9 or claim 10, wherein the organosulfonic stabilizer is present.

12. An article comprising the thermoplastic composition of any one of claims 9-11, preferably a molded article, a thermoformed article, an extruded film, an extruded sheet, a foamed article, a layer of a multi-layer article, a substrate for a coated article, or a substrate for a metallized article.

13. The article of claim 12, wherein the article is a lens.

14. A method of manufacture the article of claim 12 or claim 13 comprising molding, extruding, foaming, or casting the thermoplastic composition to form the article, preferably injection molding the thermoplastic composition.
